# EUROPEAN PATENT SPECIFICATION

(11) **EP 4 134 343 B1**
(45) Date of publication and mention of the grant of the patent: **25.11.2026**
(21) Application number: 21785004.9
(22) Date of filing: 05.04.2021
(51) Int. Cl.: B65D 88/74, B65D 88/72

(54) **TANK CONTAINER AND METHOD FOR MANUFACTURING SAME**
TANKBEHÄLTER UND VERFAHREN ZUR HERSTELLUNG DAVON
CONTENEUR-CITERNE ET SON PROCÉDÉ DE FABRICATION

(30) Priority: 06.04.2020 JP 2020068032
(43) Date of publication of application: 15.02.2023
(73) Proprietor: NRS Corporation, Tokyo 101-0054 (JP); Kanto Denka Kogyo Co., Ltd., Tokyo 141-0001 (JP); CIMC SAFEWAY TECHNOLOGIES CO., LTD., Nantong Jiangsu 226003 (CN)
(72) Inventor: NANJO Hiroshi, Tokyo 101-0054 (JP); TAKIKAWA Go, Kurashiki City, Okayama 7128533 (JP); LIU, Xi, Jiangsu 226003 (CN); ZHOU, Jian, Jiangsu 226003 (CN)
(74) Representative: Vossius & Partner Patentanwälte Rechtsanwälte mbB
(86) International application number: PCT/JP2021/014465
(87) International publication number: WO 2021/206043

(56) References cited:
- EP-A1- 1 767 468
- BE-A- 761 884
- JP-A- 2004 090 957
- JP-A- 2004 263 803
- JP-A- 2010 132 306
- JP-A- 2015 093 734
- JP-A- 2015 501 752
- US-A- 5 353 967
- US-A- 5 960 974

## Description

### Technical Field

The present invention relates to a tank container and a method of manufacturing the same.

### Background Art

Tank containers have hitherto been widely used for transporting liquid, powder, or gas such as high-pressure gas. In particular, an ISO tank container is a container that conforms to the standards defined by ISO, and hence the ISO tank container is suitable for overseas transportation as well as domestic transportation by a trailer, a container ship, or the like.

The contents to be transported by the tank container cover a wide variety of things ranging from chemicals, hazardous materials, raw materials for pharmaceuticals to foodstuffs, in addition to the above-mentioned classification by form such as liquid, powder, or gas. Of those, lithium hexafluorophosphate is a raw material for an electrolyte of a lithium/lithium ion secondary battery, and there is an increasing need for exporting lithium hexafluorophosphate overseas, as well as the need for lithium hexafluorophosphate in Japan.

Lithium hexafluorophosphate is white crystalline powder and is rapidly hydrolyzed to generate hydrogen fluoride that is extremely toxic and highly corrosive, when being brought into contact with moisture in the air, as represented by the following chemical formula.

LiPF₆+4H₂O

→LiF (lithium fluoride)+5HF (hydrogen fluoride)+H₃PO₄ (phosphoric acid)

In addition, lithium hexafluorophosphate has a risk in that, when lithium hexafluorophosphate is brought into contact with moisture in the air, a metal of an accommodation container may be corroded due to the generation of acid to cause contamination, resulting in deterioration of quality.

In addition, lithium hexafluorophosphate has low thermal stability and undergoes thermal decomposition at a relatively low temperature of about 60°C.

Accordingly, in order to accommodate and transport lithium hexafluorophosphate (powder), the airtightness that does not allow lithium hexafluorophosphate to be brought into contact with moisture in the air and the temperature stability that maintains the temperature equal to or lower than a certain temperature are required. In addition, in terms of quality, lithium hexafluorophosphate (powder) is required to be transported under the condition that a high-purity state is maintained without the risk of being mixed with other impurities during accommodation, transportation, and the like.

In general, as a transport container for powder, there are those employing the following dump system, pressurization system, and blow system.

### 1) Dump System

The dump system is a system in which powder is accommodated in a transport container such as a square container and an end portion of the transport container on an opposite side of a discharge port is lifted to incline the transport container, to thereby discharge the powder under gravity. The dump system has an advantage in that the capacity of the transport container for accommodating the powder can be increased as in a rectangular container. In addition, when the transport container is inclined at an angle equal to or larger than an angle of repose of the powder, the powder can be discharged, and stable discharge is possible. Meanwhile, in the dump system, the discharge port of the transport container is exposed to the atmosphere, and hence it is difficult to maintain airtightness.

### 2) Pressurization System (Pressure-resistant Container)

The pressurization system is a system in which gas is introduced into a pressure-resistant container without inclining the container itself accommodating powder and the powder is discharged under a state in which the powder is blown up to decrease density. In this pressurization system, the pressurization and discharge are not performed once, but the pressurization and discharge are repeated a plurality of times in many cases. The pressurization system is used for powder having a low true density in many cases, and it is difficult to apply the pressurization system to powder having a high density, such as lithium hexafluorophosphate (powder).

### 3) Blow System

The blow system is a system in which, in order to further blow up powder to decrease density as compared to the pressurization system, a rectangular flow path for passing gas is formed in a bottom portion along a longitudinal direction of a horizontal container, the upper surface of the flow path is upholstered with a cloth (canvas) that allows the passage of the gas, and the powder in the container is blown up and discharged through this cloth. A plurality of discharge ports may be formed in the blow system without being limited to one discharge port, and piping is directed upward so as not to be closed. In the blow system, the canvas is made of an organic material, such as synthetic fibers, and there is also a risk of mixing of impurities due to, for example, the detachment of components used for fixing the canvas. The blow system has poor airtightness, and the amount of the powder that remains without being discharged is large.

Further, as a technology related to the tank container capable of transporting powder, for example, the technology disclosed in Patent Literature 1 and the like have already been proposed.

In Patent Literature 1, there is disclosed an elongated container for transporting loose powder in which a bottom of the container includes a thin film support that extends along at least a part of a length of the container and is inclined in a longitudinal direction, a gas permeable thin film is bonded to the support, and the support is configured so as not to be supported by the container between longitudinal ends thereof and between lateral ends thereof.

### Citation List

### Patent Literature

[PTL 1] JP 2006-509689
US 5 960 974 A relates to an intermodal bulk container including a rigid outer frame having end frames interconnected by two upper trusses and two lower trusses and a plurality of accommodation and discharge portions, which are arranged so as to be adjacent to each other along the longitudinal direction in a lower portion of the tank main body, which have upper end portions each airtightly joined to an inner wall of the tank main body and to an adjacent portion, and which have lower end portions each formed into a downward tapered shape so as to protrude outward respectively from a plurality of openings formed on an outer peripheral surface of the tank main body portion.

### Summary of Invention

The invention is set out in the appended set of claims. Any references in the following description to embodiments, objects, aspects and/or examples, which are not covered by the appended claims, are considered as not being part of the present invention. Technical Problem

An object of the present invention is to provide a tank container which can accommodate and transport powder formed of hazardous material powder or the like while avoiding the contact of the powder with moisture in the air and a temperature rise to a temperature equal to or higher than a predetermined temperature, and which can also easily discharge the powder, and a method of manufacturing the tank container.

### Solution to Problem

### Advantageous Effects of Invention

According to the present invention, a tank container which can accommodate and transport powder formed of hazardous material powder or the like while avoiding the contact of the powder with moisture in the air and a temperature rise to a temperature equal to or higher than a predetermined temperature, and which can also easily discharge the powder, and a method of manufacturing the tank container can be provided.

### Brief Description of Drawings

FIG. 1(a) is a left side view for illustrating an ISO tank container as an example of a tank container to which a method of manufacturing a tank container according a first embodiment is applied.
FIG. 1(b) is a rear view for illustrating the ISO tank container as an example of the tank container to which the method of manufacturing a tank container according the first embodiment is applied.
FIG. 2(a) is a plan view for illustrating a tank of the tank container to which the method of manufacturing a tank container according the first embodiment is applied.
FIG. 2(b) is a bottom view for illustrating the tank of the tank container to which the method of manufacturing a tank container according the first embodiment is applied.
FIG. 3(a) is a configuration view for illustrating a reinforcing member of a tank main body portion.
FIG. 3(b) is a configuration view for illustrating a notch of the reinforming member of the tank main body portion.
FIG. 3(c) is a sectional configuration view for illustrating a loading port of the tank main body portion.
FIG. 4(a) is a configuration view for illustrating a pressure gauge of the tank main body portion.
FIG. 4(b) is a configuration view for illustrating an actuator of the tank main body portion.
FIG. 4(c) is a sectional configuration view for illustrating a gap of the tank main body portion.
FIG. 4(d) is a configuration view for illustrating a mounting structure of a temperature detection sensor of the tank main body portion.
FIG. 5(a) is a plan view for illustrating piping of the tank of the tank container to which the method of manufacturing a tank container according the first embodiment is applied.
FIG. 5(b) is a bottom view for illustrating the piping of the tank of the tank container to which the method of manufacturing a tank container according the first embodiment is applied.
FIG. 6(a) is a schematic perspective view for illustrating an accommodation and discharge portion.
FIG. 6(b) is a schematic plan view for illustrating the accommodation and discharge portion.
FIG. 6(c) is a schematic sectional view for illustrating the accommodation and discharge portion.
FIG. 7(a) is a schematic exploded view for illustrating the accommodation and discharge portion.
FIG. 7(b) is a schematic perspective view for illustrating the accommodation and discharge portion.
FIG. 7(c) is a schematic plan view for illustrating the accommodation and discharge portion.
FIG. 7(d) is a sectional view for illustrating a welded portion of the accommodation and discharge portion.
FIG. 7(e) is a sectional view for illustrating the welded portion of the accommodation and discharge portion.
FIG. 8 is a perspective configuration view for illustrating main parts of the tank of the tank container to which the method of manufacturing a tank container according the first embodiment is applied.
FIG. 9 is a perspective configuration view for illustrating the inside of the tank of the tank container to which the method of manufacturing a tank container according the first embodiment is applied.
FIG. 10(a) is a sectional view for illustrating an injection port of the tank of the tank container to which the method of manufacturing a tank container according the first embodiment is applied.
FIG. 10(b) is a sectional view for illustrating a mounting structure of a supply pipe of the tank of the tank container to which the method of manufacturing a tank container according the first embodiment is applied.
FIG. 11 is a sectional configuration view for illustrating a covering portion of an end plate of the tank of the tank container to which the method of manufacturing a tank container according the first embodiment is applied.
FIG. 12(a) is a plan configuration view for illustrating spill box portions of the tank container to which the method of manufacturing a tank container according the first embodiment is applied.
FIG. 12(b) is a side configuration view for illustrating the spill box portions of the tank container to which the method of manufacturing a tank container according the first embodiment is applied.
FIG. 13(a) is a plan configuration view for illustrating a container frame of the tank container to which the method of manufacturing a tank container according the first embodiment is applied.
FIG. 13(b) is a side configuration view for illustrating the container frame of the tank container to which the method of manufacturing a tank container according the first embodiment is applied.
FIG. 13(c) is a front configuration view for illustrating the container frame of the tank container to which the method of manufacturing a tank container according the first embodiment is applied.
FIG. 14(a) is a plan configuration view for illustrating a walk plate of the tank container to which the method of manufacturing a tank container according the first embodiment is applied.
FIG. 14(b) is a front configuration view for illustrating the walk plate of the tank container to which the method of manufacturing a tank container according the first embodiment is applied.

### Description of Embodiments

Now, embodiments of the present invention are described with reference to the drawings.

### [First Embodiment]

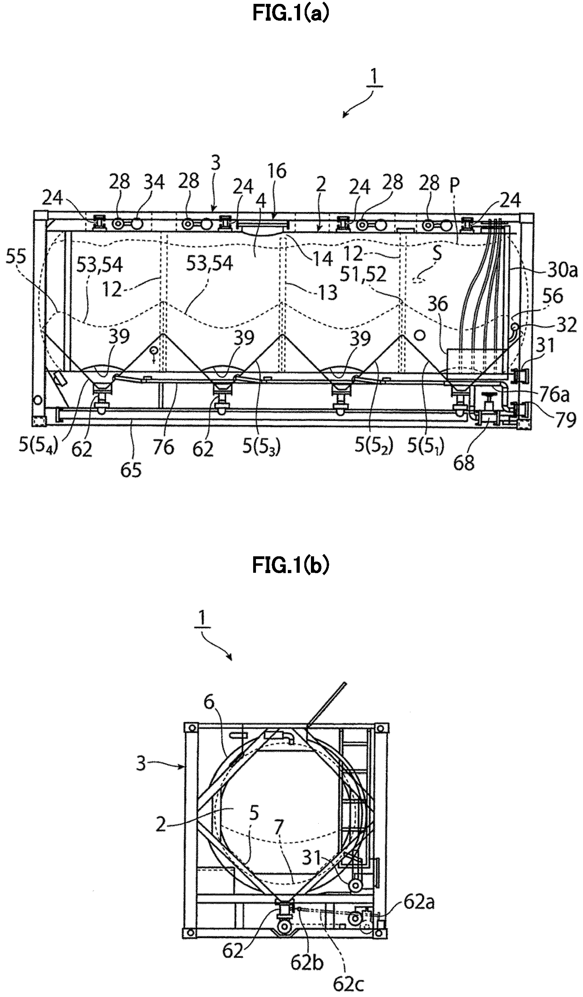

FIG. 1(a) is a left side view for illustrating an ISO tank container as an example of a tank container to which a method of manufacturing a tank container according a first embodiment of the present invention is applied, and FIG. 1(b) is a rear view for illustrating the ISO tank container.

### <Overall Configuration of Tank Container>

As illustrated in FIGS. 1, an ISO tank container 1 is roughly formed of a tank 2 as an example of a pressure-resistant container for accommodating hazardous material powder P as an example of powder, and a container frame 3 as an example of a container frame portion for fixing the tank 2. The tank 2 includes a tank main body portion 4, a plurality of (four in the illustrated example) accommodation and discharge portions 5, and a heat insulating portion 6. The tank main body portion 4 is formed into an airtight cylindrical shape. The tank main body portion 4 accommodates the hazardous material powder P therein, and is closed at both ends along a longitudinal direction. The plurality of accommodation and discharge portions 5 are arranged so as to be adjacent to each other along the longitudinal direction in a lower portion of the tank main body portion 4. The plurality of accommodation and discharge portions 5 have upper end portions, as an example of base end portions, each airtightly joined to an inner wall of a tank main body 4 and to an adjacent portion and have lower end portions, as an example of distal end portions, each formed into a downward (inverted) tapered shape so as to protrude downward from openings 39 formed on a lower surface (outer peripheral surface) of the tank main body portion 4. The heat insulating portion 6 is formed on the outer peripheral surface of the tank main body portion 4. Here, examples of the hazardous material powder P include lithium hexafluorophosphate, lithium tetrafluoroborate, lithium bis(fluorosulfonyl)imide, lithium difluorophosphate, and high-purity lithium hydroxide. However, the hazardous material powder P is not limited to the above-mentioned powders.

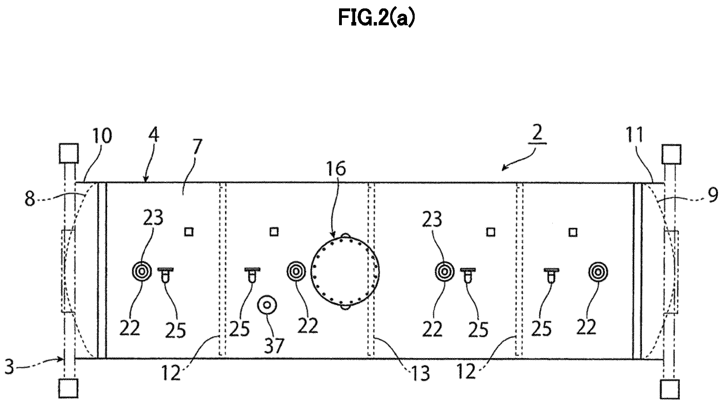

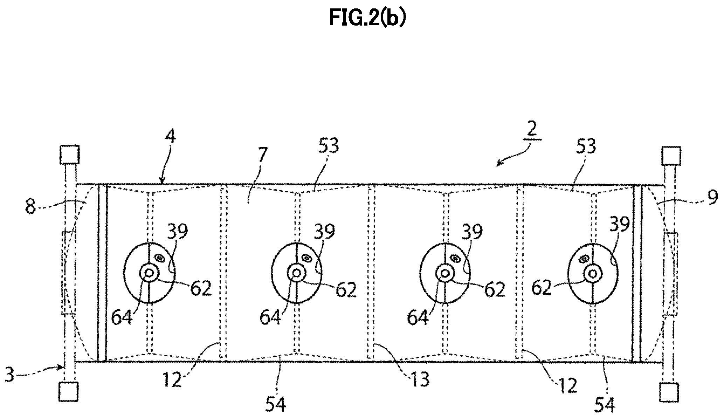

As illustrated in FIGS. 1 and FIGS. 2, the tank main body portion 4 is formed into an airtight cylindrical shape in which both ends along the longitudinal direction are closed. The tank main body portion 4 includes a cylindrical portion 7 and end plates 8 and 9. The cylindrical portion 7 is formed into a cylindrical shape. The end plates 8 and 9 are each formed into a dish shape or a semi-elliptical shape, which airtightly close both end portions along the longitudinal direction of the cylindrical portion 7, respectively. The cylindrical portion 7 of the tank main body portion 4 is formed by, for example, joining stainless steel plates or the like each having a thickness of about 4.4 mm to each other into a cylindrical shape by welding or the like. The end plates 8 and 9 are each formed by, for example, bending a stainless steel plate or the like having a thickness of about 5.3 mm, which is thicker than the cylindrical portion 7, into a dish shape or a semi-elliptical shape. After the plurality of accommodation and discharge portions 5 are installed at predetermined positions in the tank main body portion 4, the end plates 8 and 9 are joined to the both end portions along the longitudinal direction of the cylindrical portion 7 by welding or the like, to thereby form the tank main body portion 4 formed into an airtight cylindrical shape.

The tank main body portion 4 is mounted on the container frame 3 under a state of being fixed thereto through intermediation of collar members 10 and 11, as an example of short cylindrical mounting members, joined to the both end portions along the longitudinal direction of the end plates 8 and 9 by welding or the like.

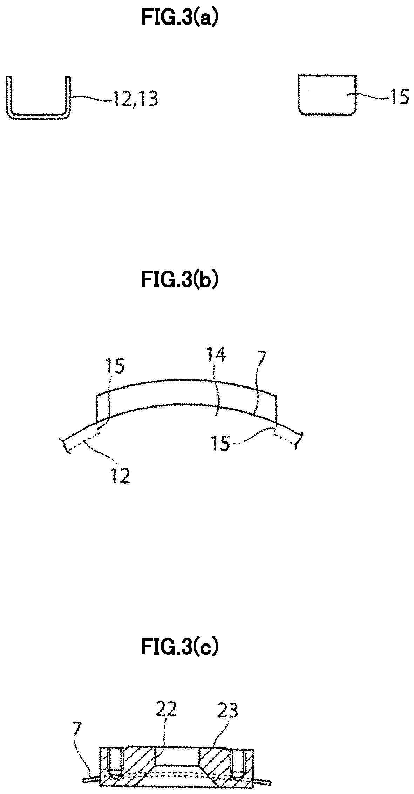

An inner peripheral surface of the tank main body portion 4 is reinforced with reinforcing members 12 and 13 each having an annular shape or having an annular shape including a notch in part arranged at equal intervals between four accommodation and discharge portions 5 adjacent to each other along the longitudinal direction of the tank main body portion 4. The tank main body portion 4 is divided into four regions along the longitudinal direction corresponding to the four accommodation and discharge portions 5. The reinforcing members 12 and 13 are respectively arranged at the boundaries of the accommodation and discharge portions 5 in the tank main body portion 4. As each of the reinforcing members 12 and 13, as illustrated in FIG. 3(a), a plate material made of a stainless steel plate or the like formed into a U-shaped cross section is used in order to impart light weight and sufficient strength. The reinforcing members 12 and 13 are each fixed to the inner peripheral surface of the tank main body portion 4 by joining (welding) distal ends of opposing both side plates thereof along the inner peripheral surface of the tank main body portion 4. As illustrated in FIG. 1(b) and FIG. 3(b), the reinforcing member 13 arranged in a center portion along the longitudinal direction of the tank main body portion 4 is formed into an annular shape including a notch 14 in part, and the reinforcing member 13 is arranged so that the notch 14 is positioned at an upper end of the tank main body portion 4. As illustrated in FIG. 3(b), the annular reinforcing member 13 including the notch 14 in part is closed with a plate member 15 having the same sectional shape as that of the reinforcing member 13 in each end portion along a circumferential direction.

The length of the tank main body portion 4 is set to a value corresponding to the length of the ISO container. As an example of the ISO container, for example, in the case of a 20-feet tank container 1, the length is set to 6,058 mm, the width is set to 2,438 mm, and the height is set to 2,591 mm, respectively. Accordingly, the container frame 3 is configured to have a length, a width, and a height corresponding to those numerical values. As illustrated in FIG. 1(a), the tank main body portion 4 fixed to the container frame 3 is formed so that the length thereof is slightly shorter than that of the container frame 3. In addition, as illustrated in FIG. 1(b), the outer diameter of the tank main body portion 4 is set to a value (small diameter) smaller than the height and the width of the container frame 3 in consideration of the heights of members such as on-off valves 24 and 62 to be mounted on an upper end portion and a lower end portion of the tank main body portion 4.

As illustrated in FIG. 2(a), a manhole 16 is formed on an upper end surface of the tank main body portion 4 slightly behind the center along the longitudinal direction thereof. The manhole 16 is formed into a cylindrical shape having a required opening diameter and height so as to protrude upward from the upper end surface of the tank main body portion 4.

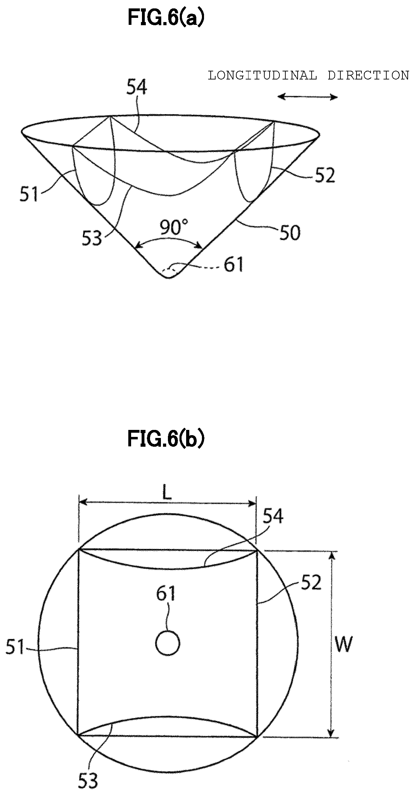

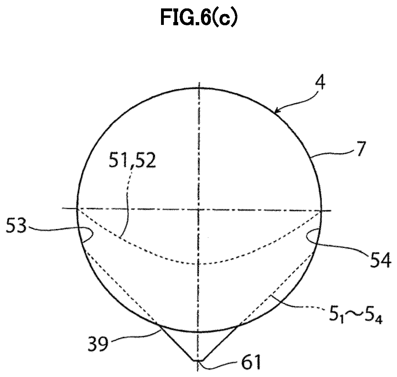

In addition, as illustrated in FIG. 2(a), on the upper end surface of the tank main body portion 4, a plurality of (four in the illustrated example) loading ports 22 for loading the hazardous material powder P, which is a content to be accommodated in the tank main body portion 4, are opened along the longitudinal direction. The loading ports 22 are opened at positions corresponding to (directly above) the discharge ports 61 of the four accommodation and discharge portions 5 illustrated in FIGS. 6 or at positions corresponding to the vicinity of (positions adjacent to those directly above) the discharge ports 61. As illustrated in FIG. 3(c), a disc-shaped loading port forming plate 23 made of stainless steel or the like having a required thickness is joined by welding or the like to a position corresponding to the loading port 22 of the tank main body portion 4. The loading port 22 having an upper end portion formed into a columnar shape and a lower end portion increased in diameter into a conical shape is opened in the loading port forming plate 23. In addition, 50.8mm ball valve 24 (2-inch ball valves 24) (see FIG. 1(a)), as an example of on-off valves for opening and closing the loading ports 22, are respectively attached upward to the loading port forming plates 23 by bolting (not shown) or the like. The ball valve 24 can be made shorter (lower) in length (height) along an axial direction thereof to be reduced in size (lowered in surface) together with an opening/closing mechanism as compared to other butterfly type valves and the like. Thus, through employment of the ball valve 24 having a relatively small diameter as an on-off valve provided on the upper end surface of the tank main body portion 4, the height of the tank main body portion 4 can be kept low.

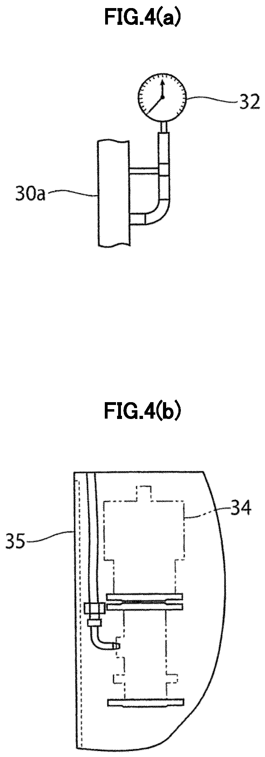

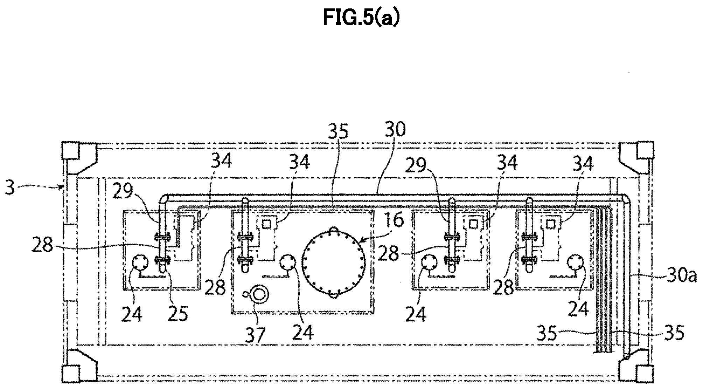

Further, on the upper end surface of the tank main body portion 4, one or more (four in the illustrated example) introduction ports 25 for introducing pressurized gas into the tank main body portion 4 are formed along the longitudinal direction. As the pressurized gas, for example, dry (water-removed) nitrogen gas N₂ is used. The four introduction ports 25 are formed so as to correspond to the four accommodation and discharge portions 5, respectively. As illustrated in FIG. 5 (a), a supply pipe 29 for supplying the pressurized gas through a second on-off valve 28, which is arranged along a horizontal direction, is connected to each of the introduction ports 25 toward one side surface (right side surface in the illustrated example) of the tank main body portion 4. Each of the supply pipes 29 is connected to a supply pipe 30 arranged in the horizontal direction forward along the right side surface in plan view of the tank main body portion 4. A distal end portion 30a of the supply pipe 30 is arranged under a state of straddling the upper end surface in an end portion on a front side of the tank main body portion 4 toward a side surface (left side surface) on an opposite side, and is arranged so as to extend downward along the outer peripheral surface (left side surface) of the tank main body portion **4.** As illustrated in FIGS. 1, a first supply valve 31 for supplying high-pressure nitrogen gas as an example of the pressurized gas is provided at a distal end (lower end) of the supply pipe 30. As illustrated in FIG. 4(a), a pressure gauge 32 that detects the pressure of the high-pressure nitrogen gas is attached to the distal end portion (lower end portion) 30a of the supply pipe 30.

The on-off valve 28 connected to each of the introduction ports 25 formed on the upper end surface of the tank main body portion 4 is driven to be opened and closed by an actuator 34 operated by compressed air, as illustrated in FIG. 4(b) and FIG. 5 (a). In each of the actuators 34, four pipes 35 for supplying nitrogen gas as an example of the compressed air are arranged along the supply pipe 30. Distal ends of the four pipes 35 are connected to a large-diameter portion 76a of a supply pipe 76, which are described later, through a control box 36. Inside the control box 36, a switching valve (not shown) for individually switching the supply of the nitrogen gas to the four pipes 35 is provided. Thus, an operator can individually switch and supply the pressurized nitrogen gas from each of the introduction ports 25 to the four accommodation and discharge portions 5 of the tank main body portion 4 by operating the control box 36.

In addition, on the upper end surface of the tank main body portion 4, as illustrated in FIG. 2(a), a safety valve 37 is attached to the left side surface on a rear side from the manhole 16 along the longitudinal direction of the tank main body portion 4. The safety valve 37 is opened when the pressure in the tank main body portion 4 reaches a predetermined set pressure, to thereby release the pressure in the tank main body portion 4 (cause the pressure to communicate) to the atmosphere. The attachment position of the safety valve 37 is not particularly limited as long as the safety valve 37 is on the upper end surface of the tank main body portion 4.

In addition, on a lower end surface of the tank main body portion 4, as illustrated in FIG. 2(b), there are formed a plurality of (four) openings 39 each having an elliptical shape, through which the lower end portions of the four accommodation and discharge portions 5 each formed into a downward tapered shape pass through so as to protrude downward from a lower surface of the tank main body portion 4. The four openings 39 are arranged along the longitudinal direction of the tank main body portion 4 at intervals equal to the arrangement intervals of the four accommodation and discharge portions 5.

As illustrated in FIG. 1(a), the four accommodation and discharge portions 5 are arranged so as to be adjacent to each other along the longitudinal direction in the lower portion of the tank main body portion 4. Here, for convenience of description, the four accommodation and discharge portions 5 are referred to as "first accommodation and discharge portion 5₁", "second accommodation and discharge portion 5₂", "third accommodation and discharge portion 5₃", and "fourth accommodation and discharge portion 5₄" in the order from the front side of the tank main body portion 4. Of the four accommodation and discharge portions 5, the two second and third accommodation and discharge portions 5₂ and 5₃ arranged in the center portion along the longitudinal direction of the tank main body portion 4 are formed into the same shape, and the two first and fourth accommodation and discharge portions 5₁ and 5₄ arranged in both end portions along the longitudinal direction of the tank main body portion 4 are formed into the same shape.

That is, of the four accommodation and discharge portions 5, in the case of the two second and third accommodation and discharge portions 5₂ and 5₃ arranged in the center portion along the longitudinal direction of the tank main body portion 4, the members arranged on both sides along the longitudinal direction thereof are the accommodation and discharge portions 5₁ and 5₄. In contrast, in the case of the two first and fourth accommodation and discharge portions 5₁ and 5₄ arranged in the both end portions along the longitudinal direction of the tank main body portion 4, the members arranged on the respective one sides are the accommodation and discharge portions 5₂ and 5₃, but the members arranged on the respective another sides are the end plates 8 and 9 of the tank main body portion 4. Thus, the two first and fourth accommodation and discharge portions 5₁ and 5₄ each have a shape different from that of the two second and third accommodation and discharge portions 5₂ and 5₃.

More specifically, the first to fourth accommodation and discharge portions 5₁ to 5₄ are common in that essentially all the portions are each formed into a downward tapered shape. Each of the accommodation and discharge portions 5₁ to 5₄ is formed by, for example, processing a plate material, such as a stainless steel plate or the like having a thickness of about 5.3 mm into a curved shape. In the invention, as illustrated in FIGS. 6, each of the accommodation and discharge portions 5₁ to 5₄ is formed into a downward (inverted) conical shape with a vertex being arranged downward along a vertical direction. The angle of the vertex of each of the accommodation and discharge portions 5₁ to 5₄ is set to 90 degrees. As a result, in each of the accommodation and discharge portions 5₁ to 5₄, the angle of repose of the hazardous material powder P defined by the inclination angle of a side surface 50 of the conical shape is set to 45 degrees. In addition, the angle of the vertex of each of the accommodation and discharge portions 5 is not limited to 90 degrees, and may be set to an angle smaller than 90 degrees (for example, about 80 degrees). In this case, in each of the accommodation and discharge portions 5₁ to 5₄, the angle of repose of the hazardous material powder P, which is the inclination angle of the side surface 50, becomes 45 degrees or more, thereby being capable of more reliably discharging the hazardous material powder P.

As illustrated in FIG. 6(a) and FIG. 6(b), each of the first to fourth accommodation and discharge portions 5₁ to 5₄ is formed so that both end surfaces along the longitudinal direction of the tank main body portion 4 are respectively cut along a plane intersecting (orthogonal to) an upper end surface of each of the accommodation and discharge portions 5₁ to 5₄ and the longitudinal direction of the tank main body portion 4 so as to have curved edges 51 and 52 each having a substantially U-shape in side view.

In addition, as illustrated in FIG. 6(a) and FIG. 6(c), each of the first to fourth accommodation and discharge portions 5₁ to 5₄ is formed into such a shape that both end surfaces along a direction intersecting the longitudinal direction of the tank main body portion 4 are respectively cut along an outer peripheral surface of the cylindrical portion 7 of the tank main body portion 4 to have curved edges 53 and 54 each having a substantially U-shape in side view.

Further, in each of the first and fourth accommodation and discharge portions 5₁ and 5₄, both end surfaces on an outer side along the longitudinal direction are respectively cut along inner surface shapes of the end plates 8 and 9 of the tank main body portion 4 to be formed into edges 55 and 56 each having a substantially U-shape in side view as illustrated in FIG. 1(a).

In each of the first to fourth accommodation and discharge portions 5₁ to 5₄, as illustrated in FIG. 6(b), a width W along the direction intersecting the longitudinal direction of the tank main body portion 4 is set to a value equal to the inner diameter of the cylindrical portion 7 of the tank main body portion 4. In addition, in each of the first to fourth accommodation and discharge portions 5₁ to 5₄, a length L along the longitudinal direction of the tank main body portion 4 is set to a length obtained by equally dividing the total length of the cylindrical portion 7 of the tank main body portion 4 into four parts.

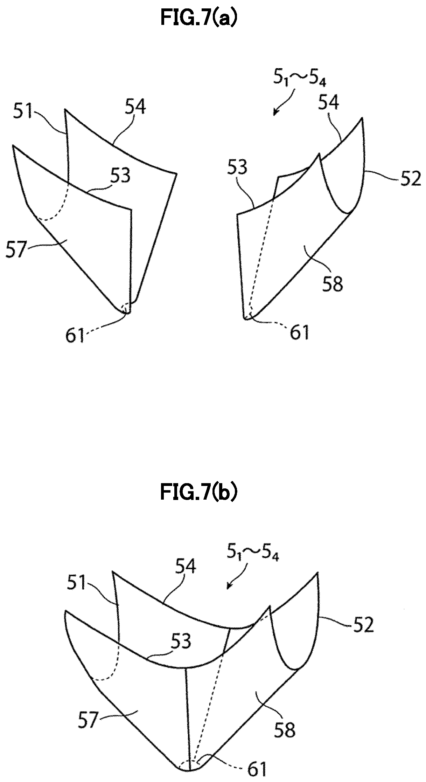

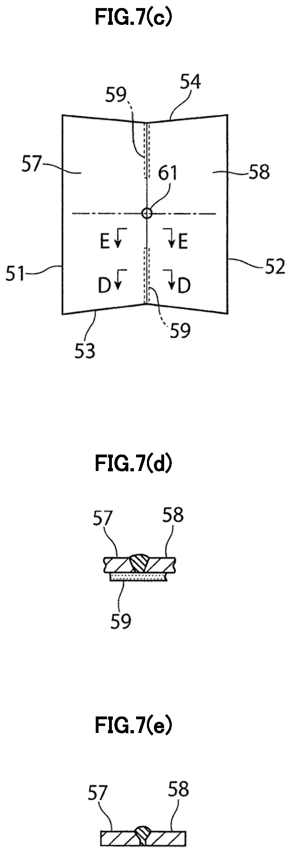

In the tank container 1 according to the invention, at the time of manufacturing the tank container 1, instead of directly using each of the first to fourth accommodation and discharge portions 5₁ to 5₄ each formed into a conical shape as illustrated in FIG. 6 (a), two constituent members 57 and 58 each having a semi-conical shape, which are obtained by diving each of the first to fourth accommodation and discharge portions 5 each formed into a conical shape into two parts along a plane in the direction intersecting (orthogonal to) an upper end surface of the conical shape and the longitudinal direction of the tank main body portion 4, are joined to each other when being installed inside the tank main body portion 4, thereby being formed into a conical shape as illustrated in FIG. 7(a).

As described above, the two constituent members 57 and 58 forming each of the first to fourth accommodation and discharge portions 5₁ to 5₄ are different in shape of edge between the two first and fourth accommodation and discharge portions 5₁ and 5₄ and the two second and third accommodation and discharge portions 5₂ and 5₃.

Manufacturing of the tank container 1 includes: a first step of forming the cylindrical portion 7 of the tank main body portion 4 formed into a cylindrical shape; a second step of forming the constituent members 57 and 58 each having a semi-conical shape, which are obtained by dividing each of the four accommodation and discharge portions 5₁ to 5₄ into two parts along the plane intersecting the upper end surface (surface having a circular shape in plan view of the conical shape) of the accommodation and discharge portions 5₁ to 5₄ and the longitudinal direction in the tank main body portion 4, the four accommodation and discharge portions 5₁ to 5₄ being arranged so as to be adjacent to each other along the longitudinal direction in the lower portion of the tank main body portion 4, the four accommodation and discharge portions 5₁ to 5₄ having upper end portions each airtightly joined to the inner wall of the tank main body portion 4 and to an adjacent portion and having lower end portions each formed into a downward conical shape so as to protrude downward from the openings 39 formed in the tank main body portion 4; and a third step of forming each of the accommodation and discharge portions 5₁ to 5₄ by carrying the two respective constituent members 57 and 58 into the tank main body portion 4 and joining the respective constituent members 57 and 58 divided into two parts to each other inside the tank main body portion 4.

More specifically, as illustrated in FIG. 6(a), the four accommodation and discharge portions 5₁ to 5₄ arranged inside the tank main body portion 4 each have the width W equal to the inner diameter of the tank main body portion 4. Thus, it is difficult to carry the accommodation and discharge portions 5₁ to 5₄ into the tank main body portion 4 after forming each of the accommodation and discharge portions 5₁ to 5₄ into a conical shape. In view of the foregoing, in the invention, as illustrated in FIG. 7(a), the constituent members 57 and 58 each having a semi-conical shape, which are obtained by dividing in advance each of the accommodation and discharge portions 5₁ to 5₄ into two parts along a plane orthogonal to the upper end surface of the conical shape and passing through the center thereof, are formed. Then, after the constituent members 57 and 58 each having a semi-conical shape divided into two parts are carried into the cylindrical portion 7 of the tank main body portion 4, the two constituent members 57 and 58 are joined (welded) to each other as illustrated in FIG. 7(a) and FIG. 7(c). The constituent members 57 and 58 each formed into a semi-conical shape have low rigidity and can elastically be deformed unlike the accommodation and discharge portions 5₁ to 5₄ each formed into a conical shape, and can easily be carried and joined to desired positions in the tank main body portion 4.

When the constituent members 57 and 58 each having a semi-conical shape divided into two parts are joined to each other by welding or the like, it is desired that a band-shaped plate material 59 be joined to a joining end of one of the constituent members 57 and 58 in advance as illustrated in FIG. 7 (d). With this configuration, when the two constituent members 57 and 58 are joined to each other, the two constituent members 57 and 58 can be joined to each other by welding or the like under a state in which the joining end of one constituent member 57 and the joining end of another constituent member 58 are accurately brought into abutment against each other. The band-shaped plate material 59 may be formed along outer surfaces of the joining ends when the two constituent members 57 and 58 are joined to each other. In order to prevent formation of a gap between the opening 39 of the tank main body portion 4 and each of the accommodation and discharge portions 5, the band-shaped plate material 59 is formed only in a region on an upper side of the opening 39 of the tank main body portion 4 as illustrated in FIG. 2(b). The inner surface of a welded site of the constituent members 57 and 58 is subjected to polishing treatment so as to be flat after joining.

In this case, the order of forming each of the four accommodation and discharge portions 5₁ to 5₄ by carrying the two constituent members 57 and 58 into the cylindrical portion 7 and joining the two constituent members 57 and 58 to each other is as described below. First, the third accommodation and discharge portion 5₃ is formed, and then the second accommodation and discharge portion 5₂ to be adjacent to the third accommodation and discharge portion 5₃ is joined thereto. Further, the fourth accommodation and discharge portion 5₄ is joined to the resultant, and finally the first accommodation and discharge portion 5₁ is joined to the resultant.

The reason for first joining the third accommodation and discharge portion 5₃ is as described below. When an end portion of the cylindrical portion 7 on the rear side is closed with the end plate 8, a joining operation becomes easier when the joining operation is performed first from the back side near the end plate 8. When the end portion of the cylindrical portion 7 on the rear side is not closed with the end plate 8, any of the third accommodation and discharge portion 5₃ and the second accommodation and discharge portion 5₂ may be joined first.

In addition, the reason for joining the fourth and first accommodation and discharge portions 5₄ and 5₁ adjacent to the end plates 8 and 9 of the cylindrical portion 7 after the third and second accommodation and discharge portions 5₃ and 5₂ in the center portion is as described below. The fourth and first accommodation and discharge portions 5₄ and 5₁ are not the same in shape in a front-and-rear direction along the longitudinal direction of the tank main body portion 4. Thus, when the fourth and first accommodation and discharge portions 5₄ and 5₁ are joined after the third and second accommodation and discharge portions 5₃ and 5₂, the joining operation can be performed in consideration of (by adjusting) the positional relationship with the third and second accommodation and discharge portions 5₃ and 5₂ joined first and the shape.

First, before the both end portions of the cylindrical portion 7 of the tank main body portion 4 are closed with the end plates 8 and 9, the two constituent members 57 and 58 forming the third accommodation and discharge portion 5₃ are carried into the cylindrical portion 7 of the tank main body portion 4 having at least one end portion opened from the opened end portion of the cylindrical portion 7, and the two constituent members 57 and 58 are joined to each other to form the third accommodation and discharge portion 5₃.

The operation of forming the third accommodation and discharge portion 5₃ by joining the two constituent members 57 and 58 is performed inside the cylindrical portion 7. In this case, the lower end portion of the third accommodation and discharge portion 5₃ is arranged so as to protrude downward from the opening 39 formed on a lower surface of the cylindrical portion 7.

Next, of the upper end portions of the third accommodation and discharge portion 5₃ formed integrally, the upper end portion opposed to an inner surface of the cylindrical portion 7 of the tank main body portion 4 is joined (welded) to the inner surface of the cylindrical portion 7 of the tank main body portion 4. In this case, the reinforcing members 12 and 13 have already been formed on the inner surface of the cylindrical portion 7 of the tank main body portion 4, and hence the third accommodation and discharge portion 5₃ is joined so as to have an appropriate positional relationship with the reinforcing members 12 and 13.

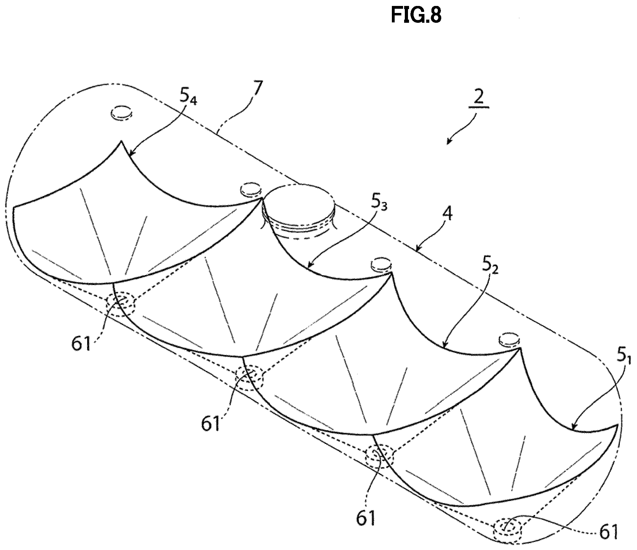

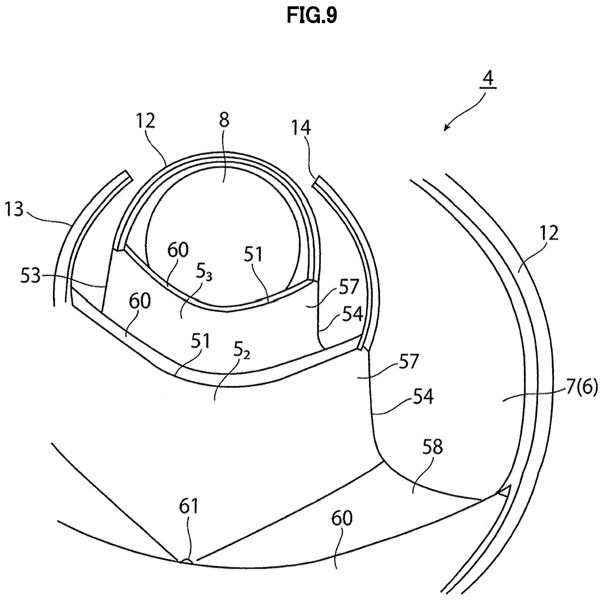

More specifically, as illustrated in FIG. 8 and FIG. 9, after the reinforcing members 12 and 13 are joined to the inner surface of the cylindrical portion 7 of the tank main body portion 4, a substantially crescent-shaped partition plate 60 is joined (welded) to a lower portion (lower half) of each of inner peripheral surfaces of the reinforcing members 12 and 13 so as to intersect (be orthogonal to) the longitudinal direction along the inner peripheral surface of each of the reinforcing members 12 and 13.

As illustrated in FIG. 9, of the upper edges of the third accommodation and discharge portion 5₃, one of the upper edges 51 and 52 along the longitudinal direction of the tank main body portion 4 is airtightly joined (welded) to the partition plate 60. In addition, of the upper edges of the third accommodation and discharge portion 5₃, the upper edges 53 and 54 along the direction intersecting the longitudinal direction of the tank main body portion 4 are airtightly joined (welded) to the inner surface of the cylindrical portion 7.

After the mounting operation of the third accommodation and discharge portion 5₃ is finished, the two constituent members 57 and 58 forming the second accommodation and discharge portion 5₂ are carried into the cylindrical portion 7 of the tank main body portion 4 from the opened end portion of the cylindrical portion 7, and the two constituent members 57 and 58 are joined to each other to form the second accommodation and discharge portion 5₂.

In this case, the upper end portion of the second accommodation and discharge portion 5₂ is airtightly joined to the upper end portion of the third accommodation and discharge portion 5₃ through intermediation of the partition plate 60 as illustrated in FIG. 9. In addition, of the upper edges of the second accommodation and discharge portion 5₂, the upper edges 53 and 54 along the direction intersecting the longitudinal direction of the tank main body portion 4 are airtightly joined (welded) to the inner surface of the cylindrical portion 7.

Similarly, as illustrated in FIG. 8, the first and fourth accommodation and discharge portions 5₁ and 5₄ are respectively joined to the cylindrical portion 7 of the tank main body portion 4.

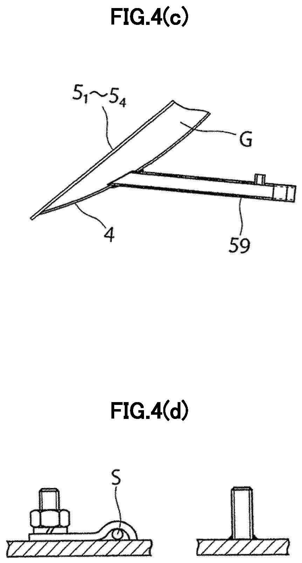

With the above-mentioned configuration, there are provided the four accommodation and discharge portions 5₁ to 5₄, which are arranged so as to be adjacent to each other along the longitudinal direction in the lower portion of the tank main body portion 4, which have upper end portions each airtightly joined to the inner wall of the tank main body portion 4 and to an adjacent portion, and which have lower end portions each formed into a downward conical shape so as to protrude downward from the openings 3 of the tank main body portion 4. As illustrated in FIG. 4^{©}, a gap G formed of an air layer is formed between the outer peripheral surface of a lower portion of the tank main body portion 4 (cylindrical portion 7) and each of inner peripheral surfaces of the first to fourth accommodation and discharge portions 5₁ to 5₄. Thus, an exhaust pipe 59 for discharging air from the gap G to an outside due to a change in outside temperature or the like is provided on the outer peripheral surface of the tank main body portion 4 (cylindrical portion 7). In addition, as illustrated in FIG. 1(a) and FIG. 4(d), a temperature detection sensor S that detects the temperature of the cylindrical portion 7 of the tank main body portion 4 is arranged in contact with the outer peripheral surface of the tank main body portion 4 (cylindrical portion 7).

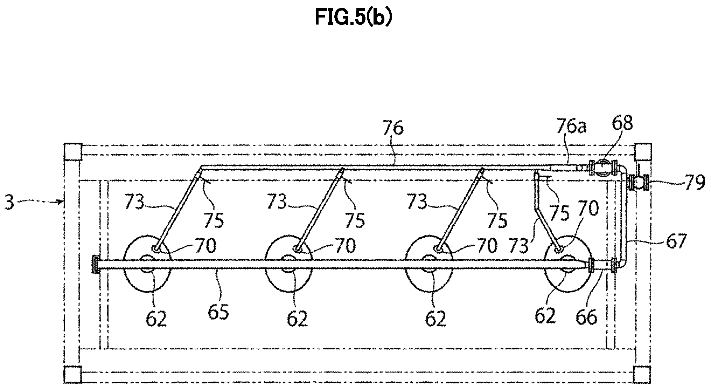

As illustrated in FIG. 8, a discharge port 61 for discharging the hazardous material powder, which is a content, to the outside is opened in the lower end portion of each of the accommodation and discharge portions 5₁ to 5₄. As illustrated in FIGS. 1, a 76.2 mm ball valve 62 (3-inch ball valve 62) as an example of an on-off valve is connected to each of the discharge ports 61. As described above, the ball valve 62 can be made shorter (lower) in length (height) along an axial direction thereof to be reduced in size (lowered in surface) as compared to other butterfly type valves and the like. As illustrated in FIG. 1(b), each of the ball valves 62 extends so that an operating portion 62a thereof is located on the left side surface of the tank main body portion 4 via a universal joint 62b and an operating shaft 62c, and each of the ball valves 62 can easily be opened and closed from the side surface of the tank main body portion 4 by rotating the operating portion 62a. In a lower portion of the ball valves 62, as illustrated in FIG. 1(a) and FIG. 5(b), a discharge pipe 65 for conveying the hazardous material powder P discharged from the ball valves 62 is provided substantially horizontally along the longitudinal direction of the tank main body portion 4. An introduction pipe 67 for introducing pressurized gas through a check valve 66 is connected to an end portion of the discharge pipe 65 on the front side along the longitudinal direction of the tank main body portion 4. A second supply valve 68 for supplying high-pressure nitrogen gas as an example of the pressurized gas is connected to a distal end of the introduction pipe 67.

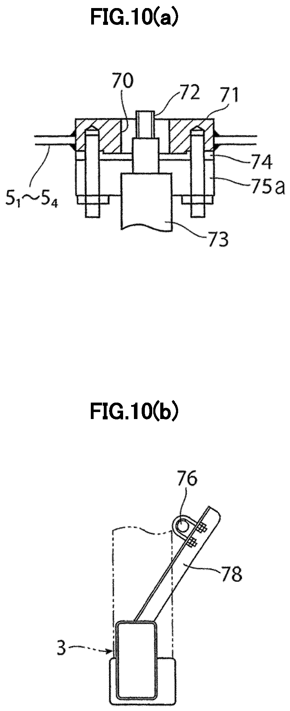

In addition, in the lower end portion of each of the accommodation and discharge portions 5₁ to 5₄, an injection port 70 for injecting the pressurized gas to the hazardous material powder P accommodated in the accommodation and discharge portion 5 is opened at a position forming a predetermined angle with respect to the direction intersecting the longitudinal direction of the tank main body portion 4. As illustrated in FIG. 10(a), each of the injection ports 70 is opened in an injection port forming plate 71. As illustrated in FIG. 10(a), each of the injection port forming plates 71 is attached under a state in which a cylindrical filter member 72 for injecting the pressurized gas, which is inserted into each of the accommodation and discharge portions 5₁ to 5₄ from the injection port 70, is inserted. The filter member 72 is airtightly attached to a distal end of a second supply pipe 73 for supplying high-pressure nitrogen gas. The distal end of the second supply pipe 73 is fixed to a coupling member 75a attached to the injection port forming plate 71 via a packing 74 under a fixed state.

As illustrated in FIGS. 5, each of the second supply pipes 73 is connected to the supply pipe 76 arranged in the horizontal direction forward along the left side surface in plan view of the tank main body portion 4. On-off valves 75 are provided between the second supply pipes 73 and the supply pipe 76, respectively. As illustrated in FIG. 10(b), the supply pipe 76 is supported by a support member 78 attached under an inclined state toward the inside of the container frame 3 between the third accommodation and discharge portion 5₃ and the fourth accommodation and discharge portion 5₄.

The large-diameter portion 76a increased in diameter on the front side of the tank main body portion 4 is formed in a distal end portion of the supply pipe 76. As illustrated in FIG. 1(a), the large-diameter portion 76a of the supply pipe 76 has a distal end portion that is further bent downward, and a third supply valve 79 is connected to the distal end, which is bent downward, toward the horizontal direction.

As illustrated in FIG. 1(a), the rear side of the second supply valve 68 is bent upward and is connected to the large-diameter portion 76a of the supply pipe 76. Thus, after the high-pressure nitrogen gas supplied from the third supply valve 79 is supplied to the large-diameter portion 76a of the supply pipe 76, the high-pressure nitrogen gas is supplied to the second supply valve 68 through the large-diameter portion 76a of the supply pipe 76, and is supplied to the discharge pipe 65 through the second supply valve 68, the introduction pipe 67, and the check valve 66.

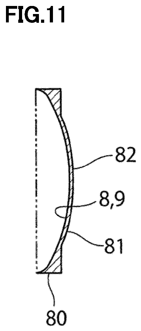

The outer peripheral surface of the tank main body portion 4 is covered with a heat insulating material 80 (see FIG. 11) forming the heat insulating portion 6. As the heat insulating material, various materials, such as a urethane foam, a polystyrene foam, a polyethylene foam, a glass foam, and a rock foam, may be used depending on the material, but it is desired that a urethane foam be used from the viewpoint of heat insulating properties. In the first embodiment, a urethane foam having a thickness of 100 mm is used.

In addition, as illustrated in FIG. 11, the surfaces of the end plates 8 and 9 of the tank main body portion 4 are made of glass wool 81 having a thickness of 25 mm in consideration of strength, and the surface of the glass wool 81 is covered with a film 82 made of aluminum.

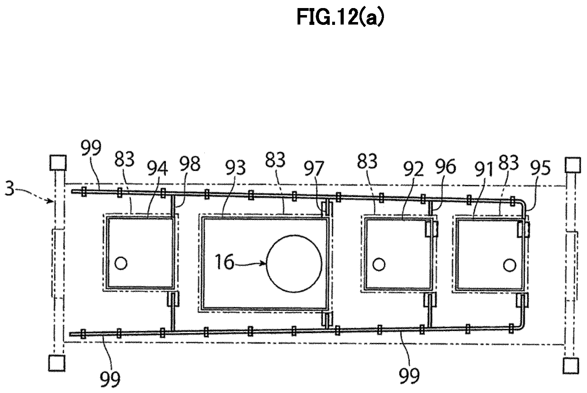

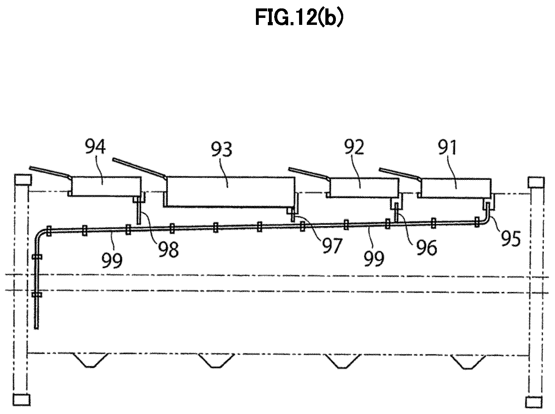

As illustrated in FIGS. 12, the spill box portions 91 to 94 that cover openings such as the manhole 16 and the ball valve 24 are provided on the upper end surface of the tank main body portion 4. Each of the spill box portions 91 to 94 is formed of a metal plate, such as stainless steel, as a rectangular frame in plan view having an upper end surface opened. In addition, covers that can be opened and closed are provided on upper end surfaces of the spill box portions 91 to 94, respectively. The outer peripheral surface of each of the spill box portions 91 to 94 is covered with a heat insulating material 83.

As illustrated in FIGS. 12, drainage pipes 95 to 98 are connected to the spill box portions 91 to 94, respectively. The drainage pipes 95 to 98 are each connected to both the right and left sides of the tank main body portion 4. Distal ends of the drainage pipes 95 to 98 are connected to a drainage pipe 99, and distal ends of the drainage pipe 99 are arranged downward on both side surfaces on the rear side of the tank main body portion 4.

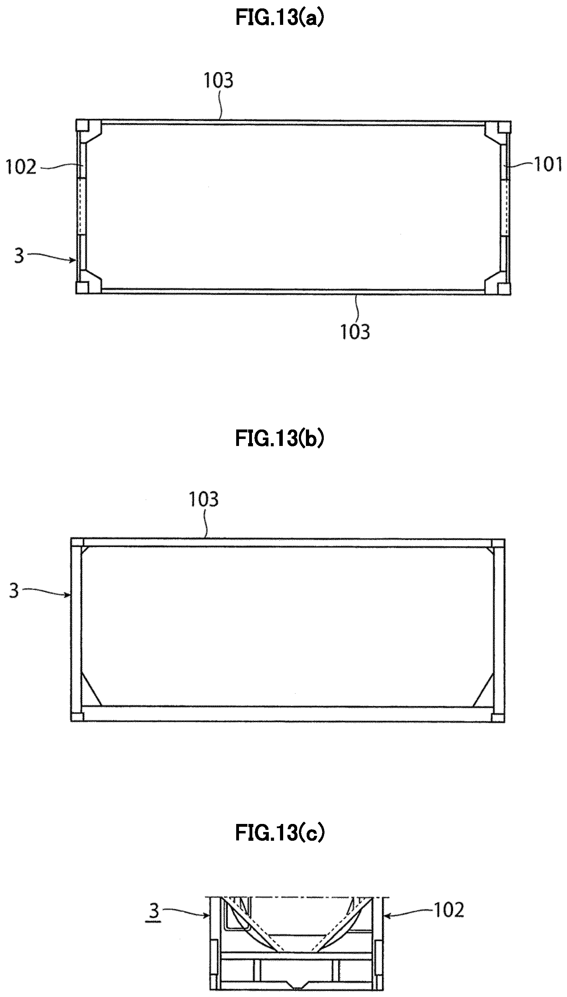

As illustrated in FIGS. 13, the container frame portion 3 that fixes the tank main body portion 4 is formed into a frame shape having a rectangular parallelepiped shape. As described above, the container frame portion 3 is set to have a length of 6,058 mm, a width of 2,438 mm, and a height of 2,591 mm in the case of a 20-feet container.

The container frame portion 3 includes rectangular frames 101 and 102 respectively forming an end surface on the front side and an end surface on the rear side along the longitudinal direction of the tank container and beam members 103 that couple the frames on the front side and the rear side to each other.

The container frame portion 3 is not limited to a full frame type, and a beam type in which distal ends of frames are connected to the surface of the tank main body portion may be employed.

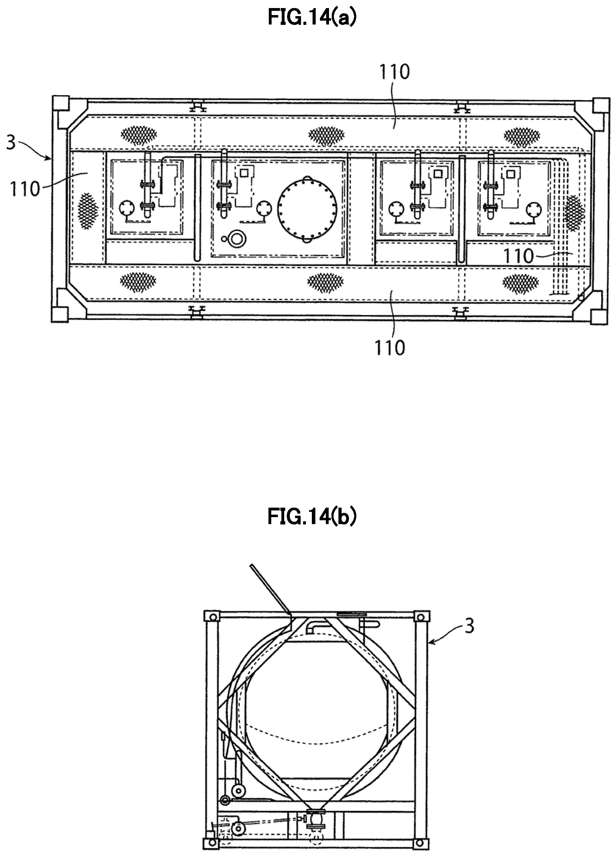

As illustrated in FIG. 14 (a), a walk plate 110 in which the operator goes up to an upper portion of the tank container 1 to perform operation is provided on an upper end surface of the container frame portion 3. The walk plate 110 is arranged between each of the spill box portions 91 to 94 and the container frame portion 3 on the upper end surface of the container frame portion 3.

### <Operation of Tank Container>

The tank container 1 according to the first embodiment can transport the hazardous material powder P while avoiding the contact of the hazardous material powder P with moisture in the air and an increase in temperature, and can also easily discharge the hazardous material powder P.

First, in order to accommodate the hazardous material powder P inside the tank main body portion 4 of the tank container 1, as illustrated in FIGS. 1, the hazardous material powder P is supplied into the tank main body portion 4 from each of the loading ports 22 through the loading valves 23 under a state in which each of the on-off valves 62 in a bottom portion of the tank main body portion 4 is closed, and as a result, the hazardous material powder P is accommodated in an internal space of the four accommodation and discharge portions 5₁ to 5₄ and the tank main body portion 4. The accommodation rate of the hazardous material powder P is set to from about 85% to about 95% when the capacity (about 13 KL) of the internal space of the four accommodation and discharge portions 5₁ to 5₄ and the tank main body portion 4 is set to 100. The following configuration may be possible. After the hazardous material powder P is accommodated in the internal space of the four accommodation and discharge portions 5₁ to 5₄ and the tank main body portion 4, nitrogen gas is introduced into the inside from the introduction ports 25 through the supply pipes 29 and 30 as illustrated in FIG. 5(a), and the air remaining inside the tank main body portion 4 is replaced by the nitrogen gas.

In this case, pressurized nitrogen gas is supplied to the supply pipes 29 and 30 through the first loading valve 31.

The tank container 1 is held under an airtight state by closing the loading valve 23 and the introduction ports 25 after the accommodation operation of the hazardous material powder P is finished. Thus, the hazardous material powder P accommodated inside the tank main body portion 4 is not brought into contact with outside air at the time of accommodation (including the time of storage) and transportation. Accordingly, even when the hazardous material powder P is made of lithium hexafluorophosphate or the like, the situation in which the powder made of lithium hexafluorophosphate or the like is brought into contact with the outside air containing moisture to be rapidly hydrolyzed to generate hydrogen fluoride that is extremely toxic and highly corrosive can reliably be prevented, as represented by the following chemical formula.

LiPF₆+4H₂O

→LiF (lithium fluoride)+5HF (hydrogen fluoride)+H₃PO₄ (phosphoric acid)

In addition, in the tank container 1, an outer periphery of the tank main body portion 4 is covered with a urethane foam serving as the heat insulating material 80 (see FIG. 11). Thus, even when the outside temperature rises, the tank container 1 can be shielded from the outside temperature by a heat insulating material (not shown) to suppress the transfer of heat to the inside of the tank main body portion 4, and an increase in temperature inside the tank main body portion 4 is suppressed. Accordingly, even when lithium hexafluorophosphate or the like is accommodated as the hazardous material powder P, the temperature of the hazardous material powder P can be maintained at a relatively low temperature that is an initial environment temperature, and the occurrence of thermal decomposition thereof is prevented.

Next, in the tank container 1, the principle of discharging the hazardous material powder P which is a load and the operation procedure for discharging the hazardous material powder P which is a load are described.

In the tank container 1, as described above, the hazardous material powder P is accommodated in the internal space of the four accommodation and discharge portions 5₁ to 5₄ and the tank main body portion 4. The hazardous material powder P in the internal space of the four accommodation and discharge portions 5₁ to 5₄ and the tank main body portion 4 is discharged under gravity by opening the discharge valve 62 provided in the lower end portion of each of the accommodation and discharge portions 5₁ to 5₄ because the four accommodation and discharge portions 5₁ to 5₄ are each formed into a substantially conical shape.

In order to discharge the hazardous material powder P to the outside after storing and transporting the hazardous material powder P, as illustrated in FIG. 5(b), there is performed an operation involving connecting the distal end of the discharge pipe 65 of the tank container 1 to an external accommodation container (not shown), then opening each of the discharge valves 62, and supplying pressurized nitrogen gas as pressurized gas from the third supply valve 79.

In this case, the order of opening each of the discharge valves 62 is not particularly limited. However, for example, it is desired that each of the discharge valves 62 be opened in the order of from the fourth accommodation and discharge portion 5₄ located on the most downstream side of the tank main body portion 4 to the third, second, and first accommodation and discharge portions 5₃ to 5₁ on the upstream side.

When the fourth discharge valve 62 of the fourth accommodation and discharge portion 5₄ located on the most downstream side of the tank main body portion 4 is first opened, the hazardous material powder P discharged from the fourth discharge valve 62 of the fourth accommodation and discharge portion 5₄ can reliably be discharged from a discharge port of the discharge pipe 65 while being assisted by the pressurized gas introduced from the third supply valve 79.

After that, when the third discharge valve 62 of the third accommodation and discharge portion 5₃ of the tank main body portion is opened, the hazardous material powder P discharged from the third discharge valve 62 of the third accommodation and discharge portion 5₃ can reliably be discharged from the discharge port of the discharge pipe 65 while being assisted by the introduced pressurized gas.

Next, when the second discharge valve 62 of the second accommodation and discharge portion 5₂ of the tank main body portion is opened, the hazardous material powder P discharged from the second discharge valve 62 of the second accommodation and discharge portion 5₂ can reliably be discharged from the discharge port of the discharge pipe 65 while being assisted by the introduced pressurized gas.

Then, when the first discharge valve 62 of the first accommodation and discharge portion 5₁ of the tank main body portion 4 is finally opened, the hazardous material powder P discharged from the first discharge valve 62 of the first accommodation and discharge portion 5₁ can reliably be discharged from the discharge port of the discharge pipe 65 while being assisted by the introduced pressurized gas.

In addition, the present invention is not limited thereto, and needless to say, the hazardous material powder P may be discharged from the discharge port of the discharge pipe 65 by simultaneously opening each of the discharge valves 62 of the first to fourth accommodation and discharge portions 5₁ to 5₄.

In any case, when the on-off valves 75 are opened under a state in which the remaining amount of the hazardous material powder P in the first to fourth accommodation and discharge portions 5₁ to 5₄ is reduced to some degree, the remaining of the hazardous material powder P in the vicinity of the bottom portions of the first to fourth accommodation and discharge portions 5₁ to 5₄ can be effectively prevented or suppressed by injecting the high-pressure nitrogen gas from the second supply pipes 73 through the filter members 72 from each of the injection ports 70 opened in the vicinity of the bottom portions of the first to fourth accommodation and discharge portions 5₁ to 5₄ as illustrated in FIG. 10(a).

The tank container 1 has a structure having the above-mentioned operation mechanism, and hence can have high airtightness. The leak rate of the gas inside the tank container 1, which is a guideline of airtightness, can be recognized from a change in pressure and a change in temperature when a predetermined period of time has passed after gas (inert gas such as air, nitrogen, helium, or the like) having a constant pressure is sealed into the tank container 1.

The leak rate of the tank container 1 according to the present embodiment was determined to be 5.2×10⁻⁵ Pa·m³/sec, which is equal or less than 1.0×10⁻⁴ Pa·m³/sec that is the standard of an airtight state. Thus, the hazardous material powder P can be transported while the contact thereof with moisture in the air is suppressed, and the discharge of the hazardous material powder P can also be easily performed. As a result, mass transportation of high-value-added hazardous material powder (effective volume: 11.3 KL) becomes possible.

### Reference Signs List

1 tank container
2 tank
3 container frame portion
4 tank main body portion
5₁ to 5₄ first to fourth accommodation and discharge portions
7 cylindrical portion
8, 9 end plate

## Claims

1. A tank container, comprising:
a tank main body portion (4) formed into an airtight cylindrical shape, which is configured to accommodate a powder therein, and which is closed at both ends along a longitudinal direction;
a plurality of accommodation and discharge portions (5), which are arranged so as to be adjacent to each other along the longitudinal direction in a lower portion of the tank main body portion (4), which have upper end portions each airtightly joined to an inner wall of the tank main body portion (4) and to an adjacent portion, and which have lower end portions each formed into a downward tapered shape so as to protrude outward respectively from a plurality of openings formed on an outer peripheral surface of the tank main body portion (4);
a heat insulating portion (6) formed on the outer peripheral surface of the tank main body portion (4); and
a container frame portion (3) having the tank main body portion (4) fixed thereto,
wherein the plurality of accommodation and discharge portions (5) are each formed into a conical shape by two respective constituent members (57, 58), the respective constituent members (57, 58) each having semi-conical shapes and being joined to each other along a plane in a vertical direction intersecting and being orthogonal to the longitudinal direction of the tank main body portion (4);
wherein the plurality of accommodation and discharge portions (5) are provided such that a width (W) along a direction intersecting and being orthogonal to the longitudinal direction of the tank main body portion (4) of each of the plurality of accommodation and discharge portions (5) is set to a value equal to an inner diameter of the tank main body portion (4);
wherein the plurality of accommodation and discharge portions (5) are provided such that a length L of each of the accommodation and discharge portions along the longitudinal direction of the tank main body portion (4) is set to a length obtained by equally dividing the total length of the cylindrical portion (7) of the tank main body portion (4) into parts corresponding to the number of accommodation and discharge portions, and
wherein an inner peripheral surface of the tank main body portion (4) is reinforced with one or more reinforcing member (12, 13) having an annular shape or having an annular shape including a partial cutout (14), each of the one or more reinforcing member (12, 13) respectively being arranged at equal intervals between accommodation and discharge portions (5) adjacent to each other along the longitudinal direction of the tank main body portion (4).

2. The tank container according to claim 1, wherein the plurality of accommodation and discharge portions (5) each have an inclination angle set to be equal to or larger than an angle of repose of the powder.

3. The tank container according to claim 1 or 2, wherein one or more introduction ports (25) each configured to introduce pressurized gas into the tank main body portion (4) are formed along the longitudinal direction in an upper portion of the tank main body portion (4).

4. The tank container according to claim 1, 2, or 3, wherein supply ports (22) each configured to supply the powder into the plurality of accommodation and discharge portions (5) are formed so as to correspond respectively to the plurality of accommodation and discharge portions (5) in an upper portion of the tank main body portion (4).

5. The tank container according to any one of claims 1 to 4, wherein injection ports (70) each configured to inject pressurized gas onto the powder accommodated in the plurality of accommodation and discharge portions (5) are formed respectively in the lower end portions of the plurality of accommodation and discharge portions (5).

6. The tank container according to any one of claims 1 to 5, wherein a discharge port configured to discharge the powder is provided in each of the lower end portions, and
wherein the discharge port is configured to be opened and closed by a discharge valve (62) formed of a ball valve.

7. The tank container according to any one of claims 1 to 6,
wherein the tank main body portion (4) has mounting members each formed into an annular shaped collar member (10, 11) fixed respectively to both end portions along the longitudinal direction, and
wherein the tank main body portion (4) is fixed to the container frame portion (3) through intermediation of said collar members (10, 11).

8. The tank container according to any one of claims 1 to 7,
wherein, in an upper portion of the tank main body portion (4), a spill box portion (91, 94) formed into a rectangular shaped frame in plan view is formed so as to surround an outer periphery of an opening formed in the upper portion of the tank main body portion (4), and
wherein an outer surface of the spill box portion (91, 94) is covered with a heat insulating material.

9. A method of manufacturing a tank container according to any one of claims 1 to 8, comprising:
a first step of forming a cylindrical portion (7) of tank main body portion (4) formed into a cylindrical shape having at least one end portion opened
a second step of forming a plurality of two respective constituent members (57, 58) each having a semi-conical shape, which are obtained by dividing each of the plurality of accommodation and discharge portions (5) to be formed into two parts along a plane intersecting and being perpendicular to the longitudinal direction of the tank main body portion (4), and which are transportable into the tank main body (4),
a third step of forming each of the plurality of accommodation and discharge portions (5) by carrying the two respective constituent members (57, 58) into the tank main body portion (4) and joining the two respective constituent members (57, 58) to each other inside the tank main body portion (4).

## Patentansprüche

1. Tankbehälter, aufweisend:
einen Tankgrundkörperabschnitt (4), der zu einer luftdichten zylindrischen Form ausgebildet ist, der konfiguriert ist, um ein Pulver darin aufzunehmen, und der an beiden Enden entlang einer Längsrichtung geschlossen ist;
mehrere Aufnahme- und Abgabeabschnitte (5), die angeordnet sind, um entlang der Längsrichtung in einem unteren Abschnitt des Tankgrundkörperabschnitts (4) aneinander angrenzend zu sein, die obere Endabschnitte aufweisen, die jeweils luftdicht mit einer Innenwand des Tankgrundkörperabschnitts (4) und mit einem angrenzenden Abschnitt verbunden sind, und die untere Endabschnitte aufweisen, die jeweils in einer nach unten verjüngten Form ausgebildet sind, um jeweils von mehreren Öffnungen, die an einer Außenumfangsoberfläche des Tankgrundkörperabschnitts (4) ausgebildet sind, nach außen vorzustehen;
einen an der Außenumfangsoberfläche des Tankgrundkörperabschnitts (4) ausgebildeten Wärmeisolierabschnitt (6); und
einen Behälterrahmenabschnitt (3), an dem der Tankgrundkörperabschnitt (4) befestigt ist,
wobei die mehreren Aufnahme- und Abgabeabschnitte (5) jeweils durch zwei jeweilige Bauteile (57, 58) zu einer konischen Form ausgebildet ist, wobei die jeweiligen Bauteile (57, 58) jeweils halbkonische Formen aufweisen und entlang einer Ebene in einer vertikalen Richtung miteinander verbunden sind, die die Längsrichtung des Tankgrundkörperabschnitts (4) schneidet und orthogonal zu dieser ist;
wobei die mehreren Aufnahme- und Abgabeabschnitte (5) derart bereitgestellt ist, dass eine Breite (W) entlang einer Richtung, die die Längsrichtung des Tankgrundkörperabschnitts (4) schneidet und orthogonal zu dieser ist, von jedem der mehreren Aufnahme- und Abgabeabschnitte (5) auf einen Wert eingestellt ist, der gleich einem Innendurchmesser des Tankgrundkörperabschnitts (4) ist;
wobei die mehreren Aufnahme- und Abgabeabschnitte (5) derart bereitgestellt sind, dass eine Länge L jedes der Aufnahme- und Abgabeabschnitte entlang der Längsrichtung des Tankgrundkörperabschnitts (4) auf eine Länge eingestellt ist, die durch gleichmäßiges Teilen der Gesamtlänge des zylindrischen Abschnitts (7) des Tankgrundkörperabschnitts (4) in Teile erhalten wird, die der Anzahl von Aufnahme- und Abgabeabschnitten entsprechen, und
wobei eine Innenumfangsoberfläche des Tankgrundkörperabschnitts (4) mit einem oder mehreren Verstärkungselementen (12, 13) verstärkt ist, die eine Ringform aufweisen oder eine Ringform aufweisen, die einen teilweisen Ausschnitt (14) einschließt, wobei jedes des einen oder der mehreren Verstärkungselemente (12, 13) jeweils in gleichen Abständen zwischen aneinander angrenzenden Aufnahme- und Abgabeabschnitten (5) entlang der Längsrichtung des Tankgrundkörperabschnitts (4) angeordnet ist.

2. Tankbehälter nach Anspruch 1, wobei die mehreren Aufnahme- und Abgabeabschnitte (5) jeweils einen Neigungswinkel aufweisen, der so eingestellt ist, dass er gleich einem oder größer als ein Schüttwinkel des Pulvers ist.

3. Tankbehälter nach Anspruch 1 oder 2, wobei eine oder mehrere Einführöffnungen (25), die jeweils konfiguriert sind, um Druckgas in den Tankgrundkörperabschnitt (4) einzuführen, entlang der Längsrichtung in einem oberen Abschnitt des Tankgrundkörperabschnitts (4) ausgebildet sind.

4. Tankbehälter nach Anspruch 1, 2 oder 3, wobei Zufuhröffnungen (22), die jeweils konfiguriert sind, um das Pulver in die mehreren Aufnahme- und Abgabeabschnitte (5) zuzuführen, so ausgebildet sind, um jeweils den mehreren Aufnahme- und Abgabeabschnitten (5) in einem oberen Abschnitt des Tankgrundkörperabschnitts (4) zu entsprechen.

5. Tankbehälter nach einem der Ansprüche 1 bis 4, wobei Einspritzöffnungen (70), die jeweils konfiguriert sind, um Druckgas auf das in den mehreren Aufnahme- und Abgabeabschnitten (5) aufgenommene Pulver einzuspritzen, jeweils in den unteren Endabschnitten der mehreren Aufnahme- und Abgabeabschnitte (5) ausgebildet sind.

6. Tankbehälter nach einem der Ansprüche 1 bis 5, wobei eine Abgabeöffnung, die zum Abgeben des Pulvers konfiguriert ist, in jedem der unteren Endabschnitte bereitgestellt ist, und
wobei die Abgabeöffnung konfiguriert ist, um durch ein aus einem Kugelventil gebildetes Abgabeventil (62) geöffnet und geschlossen zu werden.

7. Tankbehälter nach einem der Ansprüche 1 bis 6,
wobei der Tankgrundkörperabschnitt (4) Befestigungselemente aufweist, die jeweils als ein ringförmiges Kragenelement (10, 11) ausgebildet sind, das jeweils an beiden Endabschnitten entlang der Längsrichtung befestigt ist, und
wobei der Tankgrundkörperabschnitt (4) unter Vermittlung der Kragenelemente (10, 11) an dem Behälterrahmenabschnitt (3) befestigt ist.

8. Tankbehälter nach einem der Ansprüche 1 bis 7,
wobei in einem oberen Abschnitt des Tankgrundkörperabschnitts (4) ein Überlaufkastenabschnitt (91, 94), der in der Draufsicht zu einem rechteckig geformten Rahmen ausgebildet ist, so ausgebildet ist, um einen Außenumfang einer in dem oberen Abschnitt des Tankgrundkörperabschnitts (4) ausgebildeten Öffnung zu umgeben, und
wobei eine Außenoberfläche des Überlaufkastenabschnitts (91, 94) mit einem wärmeisolierenden Material bedeckt ist.

9. Verfahren zur Herstellung eines Tankbehälters nach einem der Ansprüche 1 bis 8, aufweisend:
einen ersten Schritt des Ausbildens eines zylindrischen Abschnitts (7) eines Tankgrundkörperabschnitts (4), der zu einer zylindrischen Form mit mindestens einem geöffneten Endabschnitt geformt ist,
einen zweiten Schritt des Bildens von mehreren zwei jeweiligen Bauteilen (57, 58), die jeweils eine halbkonische Form aufweisen, die erhalten werden, indem jeder der mehreren von zu bildenden Aufnahme- und Abgabeabschnitte (5) entlang einer Ebene, die die Längsrichtung des Tankgrundkörperabschnitts (4) schneidet und senkrecht zu dieser ist, in zwei Teile geteilt wird, und die in den Tankgrundkörper (4) transportierbar sind,
einen dritten Schritt des Ausbildens jedes der mehreren Aufnahme- und Abgabeabschnitte (5) durch Einbringen der zwei jeweiligen Bauteile (57, 58) in den Tankgrundkörperabschnitt (4) und Verbinden der zwei jeweiligen Bauteile (57, 58) miteinander innerhalb des Tankgrundkörperabschnitts (4).

## Revendications

1. Conteneur-citerne, comprenant :
une portion corps principal de citerne (4) formée en une forme cylindrique étanche à l'air, qui est conçue pour y recevoir une poudre, et qui est fermée au niveau de deux extrémités le long d'une direction longitudinale ;
une pluralité de portions de logement et de décharge (5), qui sont agencées de manière à être adjacentes les unes aux autres le long de la direction longitudinale dans une portion inférieure de la portion corps principal de citerne (4), qui ont des portions extrémités supérieures jointes chacune de manière étanche à l'air à une paroi interne de la portion corps principal de citerne (4) et à une portion adjacente, et qui ont des portions extrémités inférieures formées chacune en une forme effilée vers le bas de manière à faire saillie vers l'extérieur respectivement depuis une pluralité d'ouvertures formées sur une surface périphérique externe de la portion corps principal de citerne (4) ;
une portion d'isolation thermique (6) formée sur la surface périphérique externe de la portion corps principal de citerne (4) ; et
une portion cadre de conteneur (3) à laquelle est fixée la portion corps principal de citerne (4),
dans lequel la pluralité de portions de logement et de décharge (5) sont chacune formées en une forme conique par deux éléments constitutifs respectifs (57, 58), les éléments constitutifs respectifs (57, 58) ayant chacun des formes semi-coniques et étant joints l'un à l'autre le long d'un plan dans une direction verticale coupant et étant orthogonal à la direction longitudinale de la portion corps principal de citerne (4) ;
dans lequel la pluralité de portions de logement et de décharge (5) sont prévues de telle sorte qu'une largeur (W) le long d'une direction coupant et étant orthogonale à la direction longitudinale de la portion corps principal de citerne (4) de chacune de la pluralité de portions de logement et de décharge (5) est définie sur une valeur égale à un diamètre interne de la portion corps principal de citerne (4) ;
dans lequel la pluralité de portions de logement et de décharge (5) sont prévues de telle sorte qu'une longueur L de chacune des portions de logement et de décharge le long de la direction longitudinale de la portion corps principal de citerne (4) est définie sur une longueur obtenue en divisant de manière égale la longueur totale de la portion cylindrique (7) de la portion corps principal de citerne (4) en parties correspondant au nombre de portions de logement et de décharge, et
dans lequel une surface périphérique interne de la portion corps principal de citerne (4) est renforcée par un ou plusieurs éléments de renforcement (12, 13) ayant une forme annulaire ou ayant une forme annulaire comportant une découpe partielle (14), chacun du ou des éléments de renforcement (12, 13) étant respectivement agencé à des intervalles égaux entre des portions de logement et de décharge (5) adjacentes les unes aux autres le long de la direction longitudinale de la portion corps principal de citerne (4).

2. Conteneur-citerne selon la revendication 1, dans lequel la pluralité de portions de logement et de décharge (5) ont chacune un angle d'inclinaison défini pour être égal ou supérieur à un angle de repos de la poudre.

3. Conteneur-citerne selon la revendication 1 ou 2, dans lequel un ou plusieurs orifices d'introduction (25) conçus chacun pour introduire du gaz sous pression dans la portion corps principal de citerne (4) sont formés le long de la direction longitudinale dans une portion supérieure de la portion corps principal de citerne (4).

4. Conteneur-citerne selon la revendication 1, 2 ou 3, dans lequel des orifices d'alimentation (22) conçus chacun pour fournir la poudre dans la pluralité de portions de logement et de décharge (5) sont formés de manière à correspondre respectivement à la pluralité de portions de logement et de décharge (5) dans une portion supérieure de la portion corps principal de citerne (4).

5. Conteneur-citerne selon l'une quelconque des revendications 1 à 4, dans lequel des orifices d'injection (70) conçus chacun pour injecter du gaz sous pression sur la poudre logée dans la pluralité de portions de logement et de décharge (5) sont formés respectivement dans les portions extrémités inférieures de la pluralité de portions de logement et de décharge (5).

6. Conteneur-citerne selon l'une quelconque des revendications 1 à 5, dans lequel un orifice de décharge conçu pour décharger la poudre est prévu dans chacune des portions extrémités inférieures, et
dans lequel l'orifice de décharge est conçu pour être ouvert et fermé par une soupape de décharge (62) formée d'une soupape à bille.

7. Conteneur-citerne selon l'une quelconque des revendications 1 à 6,
dans lequel la portion corps principal de citerne (4) a des éléments de montage formés chacun en un élément collier de forme annulaire (10, 11) fixés respectivement aux deux portions extrémités le long de la direction longitudinale, et
dans lequel la portion corps principal de citerne (4) est fixée à la portion cadre de conteneur (3) par le biais desdits éléments colliers (10, 11).

8. Conteneur-citerne selon l'une quelconque des revendications 1 à 7,
dans lequel, dans une portion supérieure de la portion corps principal de citerne (4), une portion boîte de déversement (91, 94) formée en un cadre de forme rectangulaire dans une vue en plan est formée de manière à entourer une périphérie externe d'une ouverture formée dans la portion supérieure de la portion corps principal de citerne (4), et
dans lequel une surface externe de la portion boîte de déversement (91, 94) est recouverte d'un matériau isolant thermique.

9. Procédé permettant de fabriquer un conteneur-citerne selon l'une quelconque des revendications 1 à 8, comprenant :
une première étape de formation d'une portion cylindrique (7) de portion corps principal de citerne (4) formée en une forme cylindrique ayant au moins une portion extrémité ouverte
une deuxième étape de formation d'une pluralité de deux éléments constitutifs respectifs (57, 58) ayant chacun une forme semi-conique, qui sont obtenus en divisant chacune de la pluralité de portions de logement et de décharge (5) à former en deux parties le long d'un plan coupant et étant perpendiculaire à la direction longitudinale de la portion corps principal de citerne (4), et qui peuvent être transportés dans le corps principal de citerne (4),
une troisième étape de formation de chacune de la pluralité de portions de logement et de décharge (5) en introduisant les deux éléments constitutifs respectifs (57, 58) dans la portion corps principal de citerne (4) et en joignant les deux éléments constitutifs respectifs (57, 58) l'un à l'autre à l'intérieur de la portion corps principal de citerne (4).
